# EUROPEAN PATENT SPECIFICATION

(11) **EP 1 270 380 B1**
(45) Date of publication and mention of the grant of the patent: **09.01.2008**
(21) Application number: 01933562.9
(22) Date of filing: 30.03.2001
(51) Int. Cl.: B62D 33/00, B65D 88/00

(54) **A SEMI-TRAILER WITH COMBINABLE AND REMOVABLE CARGO CONTAINER BODY**
SATTELANHÄNGER MIT ZUSAMMENSETZBAREM AUFBAU
SEMI-REMORQUE A CONTENEUR MONTABLE ET DEMONTABLE

(30) Priority: 01.04.2000 CN 00114173
(43) Date of publication of application: 02.01.2003
(73) Proprietor: China International Marine Containers (Group) Co., Ltd., Shenzhen Guang Dong 578067 (CN)
(72) Inventor: WANG, Shisheng, Shenzhen 518067 (CN); XIE, Liangfu, Shenzhen 518067 (CN)
(74) Representative: Ganahl, Bernhard
(86) International application number: PCT/CN2001/000539
(87) International publication number: WO 2001/074650

(56) References cited:
- EP-A- 0 018 073
- EP-A- 0 318 961
- EP-A1- 0 018 073
- CN-Y- 2 315 008
- GB-A- 476 730
- US-A- 3 022 106
- US-A- 3 097 880
- US-A- 3 727 785
- US-A- 3 788 684
- US-A- 4 067 601
- US-A- 5 026 112
- US-A- 5 253 763

## Description

### Field of the Invention

The present invention relates to means of transport, and more particularly, to a semi-trailer which is drawn by a tractor.

### Background of the Invention

In the field of vehicle transportation, a kind of vehicle so called semi-trailer, which has wheels on the bottom of its rear end and has a kingpin on its front end, is hitched to a truck tractor with its kingpin engaged into the fifth wheel of truck tractor. The most simple and commonly used semi-trailer is the flatbed semi-trailer (i.e., without the top assembly). Along with the development of the needs of the users and the cargo form of transportation, the semi-trailers having corresponding top assemblies secured on its flatbed are turned out, and are evolved into various kinds of semi-trailers with secured carriages, such as semi-trailers with hard body carriages, semi-trailers with soft body carriages. The currently used carriage semi-trailer, of which the top assembly is irremovably secured to the chassis assembly, is unitary in its structure and lacks of flexibility, since the original carriage is secured, the users have to purchase another semi-trailer with different kind of top assembly when they want to adopt another kind of top assembly. In addition, due to the secured top assembly, the common semi-trailer is very bulky, for users from long distance, during the delivery of the semi-trailer product, the transportation fees will take a big proportion of the whole cost of the product.

US 3,097,880 discloses a semi-trailer which is drawn by a tractor. The semi-trailer comprises a flat rack body which is rectangular in shape and which is provided with stakes and panels forming vertical side walls at the side edges of the rack body. These side walls are removable fixed to the rack body. Between two stakes being positioned on opposite side edges of the rack body and facing each other a bow can be provided spanning from one top end of one stake to the top end of the other stake. Such bows aid in holding the stakes in the upright position.

A similar semi-trailer is shown in US 3,788,684 having a flat load bed comprising longitudinally spaced upwardly opening opposite side mounting pockets. In these pockets upstanding stakes can be seated. Between the stakes body site panels are removably positioned. Top both are provided between opposite stakes.

GB 476,730 discloses a truck body for handling freight, comprising a lower frame having permanently connected side sills for stakes resp., removable side walls adapted to be attached to the side sills, and a roof having a downwardly projecting member adapted to engage the side wall and be removably attached thereto.

### Summary of the Invention

The aim of the present invention is to provide a combinable and removable semi-trailer, which has the function of conveniently and quickly combinable carriage, it is convenient and flexible for use, and costs lower transportation fees during product delivery.

The above object is solved by a semi-trailer comprising the features of claim 1. Advantageous embodiments of the invention are defined in the subclaims.

The combinable and removable semi-trailer according to the invention comprises a semi-trailer chassis assembly, a rear frame assembly, a front wall assembly, side wall assemblies and a roof assembly, wherein said semi-trailer chassis assembly can be combinably and removably jointed to the rear, front and the side wall assemblies, said roof assembly can be combinably and removably jointed to the rear, front and the side wall assemblies; said side wall assemblies can be combinably and removably jointed to the rear frame assembly and the front wall assembly.

This semi-trailer is characterized by
a threshold installed at the bottom side of said rear frame assembly, a front bottom beam installed on the bottom side of said front wall assembly, a fixing means installed respectively on the front and rear ends of the chassis assembly, said fixing means having U-shaped sectional inner space forming a U-shaped groove,
said threshold and front bottom beam match with the inner space of the U-shaped groove of said fixing means in dimension, so that said inner space of the fixing means holds said threshold and front bottom beam to make the rear and front wall assembly fixed, so as to get the connection of the chassis assembly with the rear and front wall assembly realized.

In another embodiment of the present invention, the side wall assemblies of the top assembly (front, rear, side and cover panel assemblies) are of soft body structure, while the front, rear and cover panel assemblies are of hard body structure; alternatively, the front, rear and cover panel assemblies may be of composite structure made up of hard material frames and soft material coverings; soft body structure may be made up of soft material such as canvas, composite material of fiber and rubber.
In another embodiment of the present invention, the top assembly is of hard body structure, all assemblies are made of hard materials, which may be selected from steel, aluminum and composite materials.
According to one aspect of the present invention, by the way of combinably and removably connection between the chassis assembly and each part of top assemblies, an identical chassis assembly may be combined with semi-trailers of different specifications and forms, it is convenient to satisfy the needs of transportation and reduce the cost.
According to another aspect of the present invention, different ways of connection are provided according to the concrete materials used in soft body and hard body semi-trailers, enabling the assembly and combination of semi-trailer easy to be implemented, meanwhile, the tightness and stability of connection are also taken into consideration.

### Brief Description of the Drawings

Fig. 1 shows a semi-trailer which is hitched to a tractor with its kingpin engaged into the socket at the head of the tractor according to the present invention;
Fig. 2 shows the assembling and disassembling of the semi-trailer having soft body side wall assemblies according to the present invention;
Fig. 3 shows the connection between the rear frame assembly and the chassis assembly;
Fig. 4 shows an enlarged cross sectional view taken along the A-A line of Fig. 3;
Fig. 5 shows the connection between the front wall assembly and the chassis assembly;
Fig. 6 shows an enlarged cross sectional view taken along the B-B line of Fig. 5;
Fig. 7 shows the connection between the roof assembly and the rear, front wall assembly;
Fig. 8 shows a stereo structural diagram of the semi-trailer having soft body side wall assemblies according to the present invention;
Fig. 9 shows the connection of the soft body side wall assemblies as shown in Fig. 2 with the roof assembly, and with the chassis assembly;
Fig. 10 shows the connection of the soft body side wall assemblies as shown in Fig. 2 with the rear, front wall assembly;
Fig. 11 shows a stereo structural diagram of the semi-trailer of which six end panel assemblies are all of hard body structure according to the present invention;
Fig. 12 shows an assembling and disassembling diagram of the semi-trailer of which six end panel assemblies are all of hard body structure according to the present invention;
Fig. 13 shows the connection of the hard body side wall assemblies as shown in Fig. 12 with the roof assembly, and with the chassis assembly;
Fig. 14 shows the connection of the hard body side wall assemblies as shown in Fig. 12 with the rear, front wall assembly.

### Detailed Description of the Preferred Embodiments

The present invention will be better understood from but not limited to following description of the preferred embodiments.

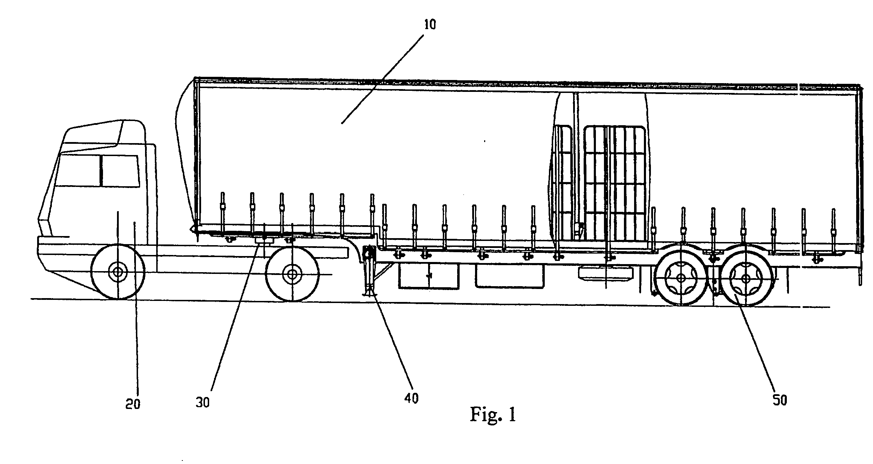

Fig. 1 shows a semi-trailer of this invention which is hitched to a tractor with its kingpin engaged into the socket at the head of the tractor. In the figure, numeral 10 represents semi-trailer of this invention; numeral 20 represents the tractor; numeral 30 represents the pulling socket on the tractor, into which the kingpin on the chassis of the semi-trailer is engaged; numeral 40 represents the support leg of the semi-trailer; numeral 50 represents the wheels of the semi-traller,

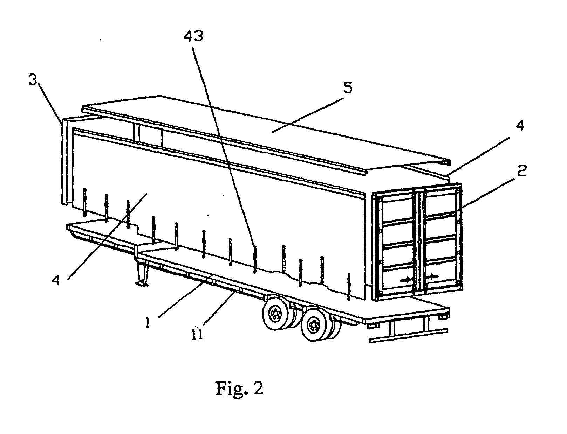

As shown in Fig. 2, the semi-trailer of this invention consists of a chassis assembly 1, a rear frame assembly 2, a front wall assembly 3, side wall assemblies 4 and a roof assembly 5, where the top assembly (rear, front, side and cover panel assemblies) may be of whole hard body structure (i.e., all assemblies are made of hard materials, which may be selected from steel, aluminum and composite materials, etc.) to make up a hard carriage semi-trailer; the top assembly may also be of partial hard body and partial soft body structure (i.e., some assemblies are made of soft material such as canvas, composite material of fiber and rubber, e.g., the side wall assemblies may be made of canvas) to make up a soft carriage semi-trailer; the rear, front and cover panel assemblies may also be made of combined structure with hard material frames and soft material coverings. The chassis assembly 1 can be combinably and removably jointed to the rear frame assembly 2, front wall assembly 3 and the side wall assemblies 4; the roof assembly 5 can be combinably and removably jointed to the rear frame assembly 2, front wall assembly 3 and the side wall assemblies 4; the side wall assembies 4 can be combinably and removably jointed to the rear frame assembly 2 and the front wall assembly 3.

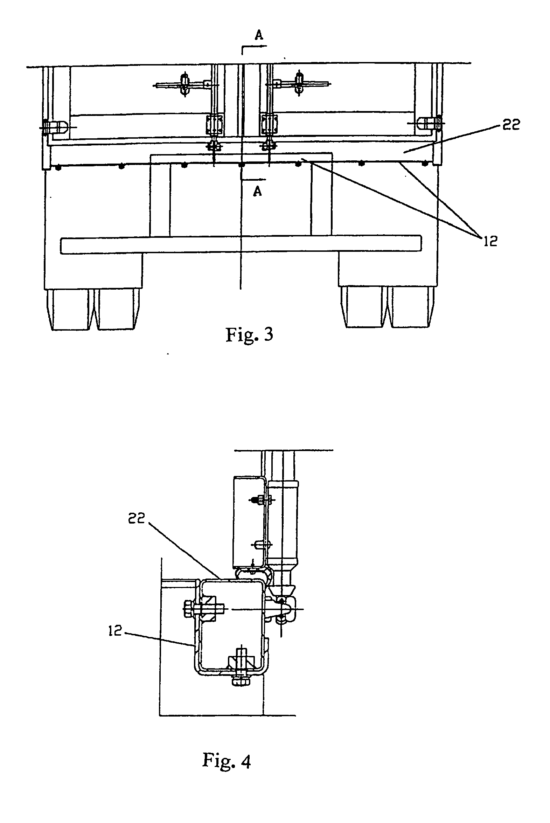

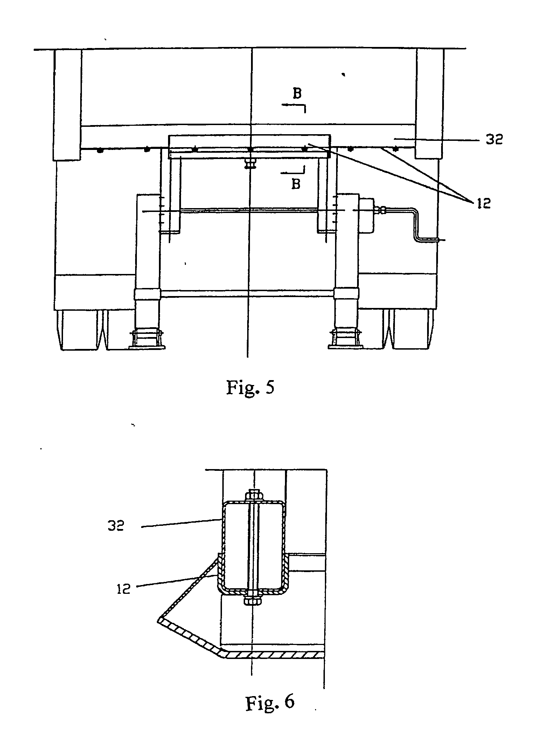

Fig. 3 - 6 illustrate the connecting structure between the semi-trailer chassis assembly and the rear, front wall assembly, on both of the front and rear end of the chassis assembly 1 are installed fixing means 12 having U-shape section, on the bottom side of the rear frame assembly 2 is installed a threshold 22 corresponding to the fixing means 12, on the bottom side of the front wall assembly 3 is installed a front bottom beam 32 corresponding to the fixing means 12, the external dimensions of the threshold 22 and the front bottom beam 32 match with the inner space of the fixing means 12 correspondingly; the fixing means 12 is further connected with the threshold 22 and the front bottom beam 32 by screw connectors. When the threshold 22 of the rear frame assembly 2 and the front bottom beam 32 of the front wall assembly 3 are placed vertically into the corresponding fixing means 12, the rear frame assembly 2 and the front wall assembly 3 will be fixed automatically, i.e.: they will be limited in all of the six freedom degrees of back and forth, left and right, up and down, and three directions of rotation, in addition with the further fixing with twelve M20 screw connectors on the bottom and sides, the connecting between the rear frame assembly and the chassis assembly is completed. Since it is connected with screw connectors, it is very convenient for disassembling, and after disassembling, other top assemblies may be installed. The above connecting structure is also applicable to the connecting between the front wall assembly 3 and the chassis assembly 1.

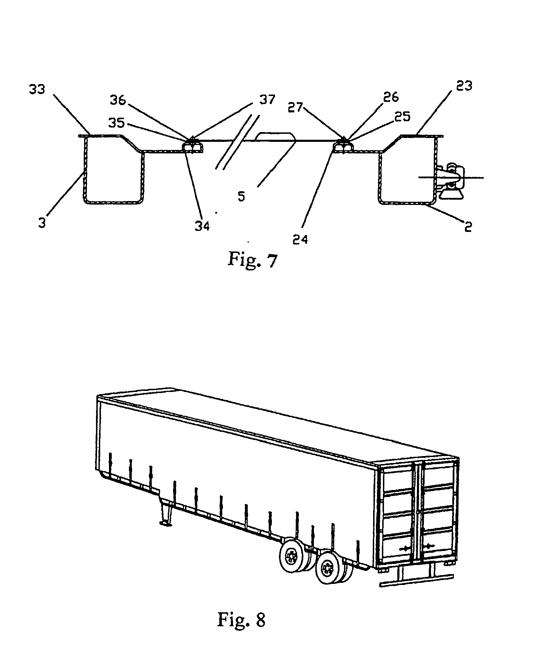

Fig. 7 illustrates a concrete form of connecting the roof assembly 5 with the rear frame assembly 2 and with the front wall assembly 3. As shown in Fig. 7, the way of connecting the roof assembly 5 to the top beam 33 of the front wall assembly 3 and to the top beam 23 of the rear frame assembly 2 is to place the two ends of the roof assembly 5 onto the fixing board 34 of the top beam 33 of the front wall assembly and the fixing board 24 of the top beam 23 of the rear frame assembly, to prevent water leakage, water proof rubber spacers 35, 25 are placed between the fixing board 34, 24 and the roof assembly 5, in addition, the plate spacers 36, 26 and screw connectors 37 are used to closely connected the roof assembly 5 with the front, rear frame assembly.
Fig. 2 and Fig. 8 illustrate a typical embodiment of a soft carriage semi-trailer of this invention, in this invention, the side wall assemblies 4 are of soft body structure, other assemblies are of hard body structure.

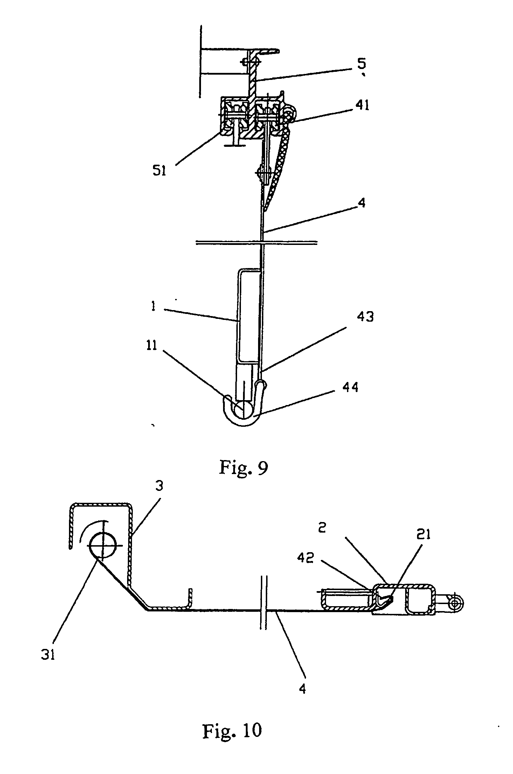

Fig. 9 illustrates a concrete form of connecting the side wall assemblies 4 of the above soft carriage semi-trailer with the roof assembly 5 and with the chassis assembly 1, on the top of the side wall assemblies 4 are installed pulleys 41, on two sides of the roof assembly 5 are installed tracks 51 corresponding with the pulleys 41; and by the coordination of the pulleys and the tracks, the side wall assemblies 4 are slidingly connected with the roof assembly 5. On the bottom of the two sides of the chassis assembly 1 are installed rope rails 11, on the bottom side of the side wall assemblies 4 are installed several belts 43 which can be tightened up, on bottom ends of the belts 43 are installed belt hooks 44 corresponding with the rope rails 11. In the present embodiment, the side wall assemblies 4 are actually side curtains, of which the top end may slide towards each of the two sides, so as to be convenient for loading with curtains opened and for transportation with curtains closed. The belts 43 and the belt hooks 44 installed on the bottom of the side curtains are used for quickly tightening up the canvas up-and-down in operation.
Fig. 10 illustrates a concrete form of connecting the side wall assemblies 4 of the soft carriage semi-trailer with the rear frame assembly 2 and with the front wall assembly 3, on the rear end of the side wall assemblies 4 are installed hooks 42, on two sides of the rear frame assembly 2 are installed bending hanging boards 21 matching with the hooks 42, the hooks 42 are hanged on the hanging boards 21; on the two sides of the front wall assembly 3 are installed self-locking tensioners 31, the front ends of the side wall assemblies 4 are winded round the tightening rollers 31. The interlocking of the tightening rollers 31 may be realized by ratchet.

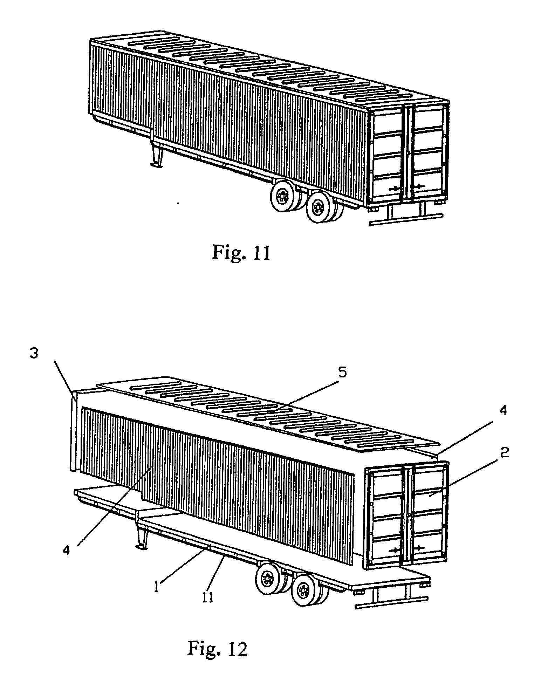

Fig. 11 and Fig. 12 illustrate a typical embodiment of a hard carriage semi-trailer of this invention, in the present invention, the side wall assemblies 4 are of hard body structure.

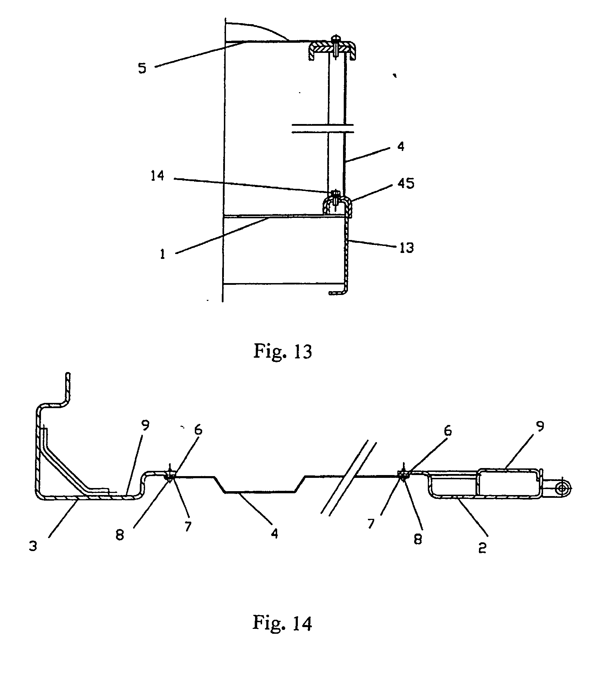

Fig. 13 illustrates a concrete form of connecting the side wall assembly 4 of the hard carriage semi-trailer with the roof assembly 5 and with the chassis assembly 1. The side wall 4 are connected with the chassis assembly 1 by the way of concave-convex coupling, i.e., on the two sides of the chassis assembly 1 are installed bottom side beams 13, while on the bottom of the side wall assemblies 4 are installed bottom beam 45 with U-shaped section and with downwards opening, the internal dimension of the bottom beam 45 matches with the external dimension of the top end of the bottom side beam 13, after they are coupled, the two parts are further secured with screw connectors 14. The installation is simple and reliable, without water leakage. The screw connectors 14 are installed at the center of the convex swelling in the side wall assemblies of the carriage, which will neither affect the outside appearance, nor the inner space. The connection between the roof assembly 5 and the side wall assemblies 4 adopt the same way of coupling, and also has the advantages such as simple installation and water proof, etc. Fig. 14 illustrates a concrete form of connecting the side wall assemblies 4 of the hard carriage semi-trailer with the front wall assembly 3 and with the rear frame assembly 2. On the connecting points where the side wall assemblies 4 are connected with rear frame assembly 2 and with front wall assembly 3 are installed water proof rubber spacers 6 and plate spacers 7, and the water proof rubber spacers 6, plate spacers 7 and side wall assemblies 4 are pressed closely onto the corner poles 9 of both sides of the rear frame assembly 2 and the front wall assembly 3 with screw connectors 8, so as to get the connection of the side wall assemblies 4 with rear frame assembly 2 and with front wall assembly 3 realized.
According to the situation such as the connection dimension, connection strength required and the operation space, threaded bolts, bars or nails may be adopted as the screw connectors used in the semi-trailer of this invention, other fittings such as screw nuts, washers can also be used when necessary.
By the way of different kinds of combination of the semi-trails, modern transportation tools of various kinds of forms, uses and functions are available: flatbed semi-trailers, whole sealing semi-trailers with hard body carriages, semi-trailers with side curtains, cover opening semi-trailers, whole covering semi-trailers.

### Industrial Applicability of the Invention

According to the semi-trailer of this invention, since different parts are combinably and removably connected, the same chassis assembly can be combined with many kinds of top assemblies to make up carriages to satisfy different demands, so that the users can assemble and disassemble on desire, and the cost for equipment procurement are reduced. The basic structure of the chassis assembly is a flatbed semi-trailer, which can be used without top assembly to implement transportation tasks for some special goods, such as transportation for over-width, over-length goods: steel products, frames, etc.; it can be changed with different top assemblies according to different transportation needs of users, for long distance transportation (over 1000 km), hard body top assembly which is safe and reliable is adopted, for middle or short distance transportation, soft body top assembly which is convenient for cargo loading and unloading is adopted, further more, corresponding top assemblies can be changed with according to height requirements of different kinds of goods; when users from long distance purchase the products of this invention, the products can be assembled on the delivery place, so that the transportation fees for product delivery are greatly reduced, and the cost of this product is also reduced.

## Claims

1. A semi-trailer, comprises a semi-trailer chassis assembly (1), a rear frame assembly (2), a front wall assembly (3), side wall assemblies (4) and a roof assembly (5), wherein said semi-trailer chassis assembly (1) can be combinably and removably jointed to the rear, front and the side wall assemblies (2, 3, 4), said roof assembly (5) can be combinably and removably jointed to the rear, front and the side wall assemblies (2, 3, 4),
said side wall assemblies (4) can be combinably and removably jointed to the rear frame assembly (2) and the front wall assembly (3),
**characterized in that**
a threshold (22) is installed on the bottom side of said rear frame assembly (2),
a front bottom beam (32) is installed on the bottom side of said front wall assembly (3),
a fixing means (12) is installed respectively on the front and rear ends of the chassis assembly (1), said fixing means (12) having U-shape sectional inner space forming a U-shape groove,
said threshold (22) and front bottom beam (32) match with the inner space of the U-shaped groove of said fixing means (12) in dimension, so that said inner space of the fixing means (12) holds said threshold (22) and front bottom beam (32) to make the rear and front wall assembly (2, 3) fixed, so as to get the connection of the chassis assembly (1) with the rear and front wall assembly (2, 3) realized.

2. A semi-trailer according to claim 1, **characterized in that**, said semi-trailer (10), wherein said semi-trailer chassis assembly (1) is connected to the rear frame assembly (2) and the front wall assembly (3) with screw connectors;
said roof assembly (5) is connected to the rear frame assembly (2) and the front wall assembly (3) with screw connectors.

3. A semi-trailer according to claim 1 or 2, **characterized in that**, said fixing means (12) is further connected to said threshold (22) and said front bottom beam (32) with screw connectors.

4. A semi-trailer according to any of the claims 1 to 3, **characterized in that**, a fixing board (24, 34) is installed respectively on the top beams (23, 33) of said rear frame and front wall assembly (2, 3), the two ends of said roof assembly (5) are placed directly onto said fixing boards (24, 34), wherein the roof assembly (5) is connected to said front and rear frame assembly (2, 3) with connectors

5. A semi-trailer according to claim 4, **characterized in that**, said connectors connecting said roof assembly (5) with said front wall and rear frame assembly (3, 2) include,
water proof rubber spacers (25, 35), which are installed respectively between said roof assembly (5) and the fixing boards (24, 34) of said front wall and rear frame assembly (3, 2);
screw connectors (27, 37); and
plate spacers (26, 36), which are placed between said screw connectors (27, 37) and said water proof rubber spacers (25, 35);
the close connection of said roof assembly (5) with the front wall and rear frame assembly (3, 2) is realized by the way of the coordination of said water proof rubber spacers (25, 35), plate spacers (26, 36) and screw connectors (27, 37).

6. A semi-trailer according to any of the claims 1 to 5, **characterized in that**, said side wall assemblies (4) are of soft body structure.

7. A semi-trailer according toclaim 6, **characterized in that**, pulleys (41) are installed on the top of said side wall assemblies (4)wherein on two sides of said roof assembly (5) are installed tracks (51) matching with said pulleys (41), and by the coordination of the pulleys (41) and the tracks (51), said side wall assemblies (4) are slidingly connected with said roof assembly (5).

8. A semi-trailer according to claim 6 or 7, **characterized in that**, rope rails (11) are installed on the bottom of the two sides of said chassis assembly (1), wherein several belts (43) which can be tightened up are installed on the bottom side of said side wall assemblies (4), on bottom ends of said belts (43) are installed belt hooks (44) corresponding with said rope rails (11), in operation, they are used for quickly tightening up said side wall assemblies (4);
the connection of said side wall assemblies (4) with chassis assembly (1) is realized by the way of the coordination of said rope rails (11) and belts (43).

9. A semi-trailer according to any of the claims 6 to 8, **characterized in that**, hooks (42) are installed respectively on the rear ends of said side wall assemblies (4), on two sides of said rear frame assembly (2) are installed bending hanging boards (21) matching with said hooks (42), said side wall assemblies (4) are connected with rear frame assembly (2) by the way of hanging said hooks (12) on said hanging boards (21).

10. A semi-trailer according to any of the claims 6 to 9, **characterized in that**, self-locking tensioners (31) are installed on the two sides of said front wall assembly (3), said side wall assemblies (4) are connected with said front wall assembly (3) by the way of winding the front ends of the side wall assemblies (4) round tightening rollers of the self-locking tensioners (31).

11. A semi-trailer according to any of the claims 1 to 4, **characterized in that**, said side wall assemblies (4) are of hard body structure.

12. A semi-trailer according to claim 11, **characterized in that**, said side wall assemblies (4) are connected to said chassis assembly (1), rear frame, front wall and roof assembly (2, 3, 5) with screw connectors.

13. A semi-trailer according to claim 11 or 12, **characterized in that**, on the two sides of said chassis assembly (1) are installed onwards protruding bottom side beams (13);
a bottom beam (45) is installed respectively on the bottom sides of said side wall assemblies (4), said bottom beam (45) has a downwards opening forming a U-shape sectional inner space, which matches with said bottom side beam (13) in dimension, wherein the two parts are coupled with each other and form a concave-convex coupling, so as to get the connection of the side wall assemblies (4) with the chassis assembly (1) realized.

14. A semi-trailer according to claim 13, **characterized in that**, further connection is realized at the convex swelling of the concave-convex coupling with screw connectors (14).

15. A semi-trailer according to any of the claims 11 to 14, **characterized in that**, said roof assembly (5) is connected to side wall assemblies (4) with concave-convex coupling.

16. A semi-trailer according to any of the claims 11 to 15, **characterized in that**, a corner pole (9) is installed respectively on both sides of said front wall assembly (3) and rear frame assembly (2), for the use of connecting the rear frame and the front wall assemblies (2, 3) with the side wall assemblies (4).

17. A semi-trailer according to claim 16, **characterized in that**, water proof rubber spacers (6) and plate spacers (7) are further installed on the connecting point of said side wall assemblies (4) with rear frame and front wall assemblies (2, 3), said water proof rubber spacers (6), plate spacers (7) and side wall assemblies (4) are pressed closely onto the corner poles (9) of both sides of the rear frame and front wall assemblies (2, 3) with screw connectors so as to get the connection of the side wall assemblies (4) with rear frame and front wall assemblies (2, 3) realized.

18. A semi-trailer according to any of the claims 2 to 17, **characterized in that**, said screw connectors are threaded bolts, bars or nails.

## Patentansprüche

1. Sattelanhänger, umfassend eine Sattelanhängerfahrgestellbaugruppe (1), eine hintere Rahmenbaugruppe (2), eine Vorderwandbaugruppe (3), Seitenwandbaugruppen (4) und eine Dachbaugruppe (5), wobei die Sattelanhängerfahrgestellbaugruppe (1) kombinierbar und lösbar mit der hinteren, der vorderen und den Seitenwandbaugruppen (2, 3, 4) verbunden werden kann, wobei die Dachbaugruppe (5) kombinierbar und lösbar mit der hinteren, der vorderen und den Seitenwandbaugruppen (2, 3, 4) verbunden werden kann, und die Seitenwandbaugruppen (4) kombinierbar und lösbar mit der hinteren Rahmenbaugruppe (2) und der Vorderwandbauruppe verbunden werden können,
**dadurch gekennzeichnet dass**,
eine Schwelle (22) an der Unterseite der hinteren Rahmenbaugruppe (2) ausgebildet ist,
ein vorderer Bodenbalken (32) auf der Unterseite der Vorderwandbaugruppe (3) ausgebildet ist,
Befestigungsmittel (12) entsprechend an den vorderen und an den hinteren Enden der Fahrgestellbaugruppe (1) ausgebildet sind, wobei die Befestigungsmittel (12) einen im Schnitt U-förmigen inneren Raum welcher eine U-förmige Nut ausbildet aufweisen, und
die Schwelle (22) und der vordere Bodenbalken (32) vom Innenraum der U-förmigen Nut der Befestigungsmittel (12) derart aufgenommen werden, dass die Schwelle (22) und der vordere Bodenbalken (32) mit dem Innenraum der U-förmigen Nut die Befestigungsmittel (12) derart in den Abmessungen übereinstimmen, dass der Innenraum der Befestigungsmittel (12), die Schwelle (22) und den vorderen Bodenbalken (32) hält, um die hintere und die vordere Wandbaugruppe (2, 3) zu fixieren, derart, dass die Verbindung der Fahrgestellbaugruppe (1) mit der hinteren und vorderen Wandbaugruppe (2, 3) realisiert wird.

2. Sattelanhänger gemäß Anspruch 1,
**dadurch gekennzeichnet,**
**dass** der Sattelanhänger (10) derart weitergebildet ist, dass die Sattelanhängerfahrgestellbaugruppe (1) mit der hinteren Rahmenbaugruppe (2) und der Vorderwandbaugruppe (3) mittels Schraubenverbindungen verbunden ist, und
die Dachbaugruppe (5) mit der hinteren Rahmenbaugruppe (2) und der Vorderwandbaugruppe (3) mittels Schraubenverbindungen verbunden ist.

3. Sattelanhänger gemäß Anspruch 1 oder 2,
**dadurch gekennzeichnet,**
**dass** die Befestigungsmittel (12) zudem mit der Schwelle (22) und dem vorderen Bodenbalken (32) mittels Schraubenverbindungen verbunden sind.

4. Sattelanhänger gemäß einem der Ansprüche 1 bis 3,
**dadurch gekennzeichnet,**
**dass** ein Befestigungsabschnitt bzw. eine Befestigungsplatte (24, 34) jeweils an den Oberbalken (23, 33) der hinteren Rahmen- und der Vorderwandbaugruppe (2, 3) ausgebildet ist, wobei die beiden Enden der Dachbaugruppe (5) direkt auf den Befestigungsplatten (24, 34) angeordnet sind, wobei die Dachbaugruppe (5) mit der Vorderwand- und der hinteren Rahmenbaugruppe (3, 2) mit Verbindungsmitteln verbunden ist.

5. Sattelanhänger gemäß Anspruch 4,
**dadurch gekennzeichnet,**
**dass** die Verbindungsmittel die Dachbaugruppe (5) mit der Vorderwand und der hinteren Rahmenbaugruppe (3, 2) verbinden,
umfassend
wasserdichte Kunststoffabstandshalter (25, 35), die jeweils zwischen der Dachbaugruppe (5) und den Befestigungsplatten (24, 34) der Vorderwand-und der hinteren Rahmenbaugruppe (2, 3) angeordnet sind, Schraubenverbindungen (27, 37) und Plattenabstandshalter (26, 36), die zwischen den Schraubenverbindungen (27, 37) und den wasserdichten Gummiabstandshaltern (25, 35) angeordnet sind,
wobei eine Schließverbindung der Dachbaugruppe (5) mit der Vorderwand-und der hinteren Rahmenbaugruppe (3, 2) durch die Anordnung der wasserdichten Gummiabstandshalter (25, 35), der Plattenabstandshalter (26, 36) und der Schraubenverbindungen (27, 37) realisiert ist.

6. Sattelanhänger gemäß einem der Ansprüche 1 bis 5,
**dadurch gekennzeichnet,**
**dass** die Seitenwandbaugruppen (4) eine Weichkörperstruktur aufweisen.

7. Sattelanhänger gemäß Anspruch 6,
**dadurch gekennzeichnet,**
**dass** Rollen (41) am oberen Ende der Seitenwandbaugruppen (4) angeordnet sind, wobei an zwei Seiten der Dachbaugruppe (5) Schienen (51) ausgebildet sind, welche mit den Rollen (41) zusammenpassen, und durch die Anordnung der Rollen (41) und der Schienen (51) die Seitenwandbaugruppen (4) verschiebbar mit der Dachbaugruppe (5) verbunden sind.

8. Sattelanhänger gemäß Anspruch 6 oder 7,
**dadurch gekennzeichnet,**
**dass** Seilschienen (11) auf der Unterseite der beiden Seiten der Fahrgestellbaugruppe (1) angeordnet sind, wobei verschiedene Gurte (43), die festgezogen werden können auf der Unterseite der Seitenwandbaugruppen (4) ausgebildet sind, am unteren Ende der Gurte (43) Gurtschlösser (44) zu den Seilschienen (11) entsprechend angeordnet sind, die im Betrieb zum schnellen Festziehen der Seitenwandbaugruppen (4) verwendet werden, und
die Verbindung der Seitenwandbaugruppen (4) mit der Fahrgestellbaugruppe (1) durch die Anordnung der Seilschienen (11) und Gurte (43) realisiert wird.

9. Sattelanhänger gemäß einem der Ansprüche 6 bis 8,
**dadurch gekennzeichnet,**
**dass** Haken (42) jeweils an den hinteren Enden der Seitenwandbaugruppen (4) ausgebildet sind und an zwei Seiten der hinteren Rahmenbaugruppe (2) gebogene Hängeabschnitte (21) welche mit den Haken (42) zusammenpassen ausgebildet sind, wobei die Wandbaugruppen (4) mit der hinteren Rahmenbaugruppe (2) durch Einhängen der Haken (42) in die gebogenen Hängeabschnitte (21) verbunden werden.

10. Sattelanhänger gemäß einem der Ansprüche 6 bis 9,
**dadurch gekennzeichnet,**
**dass** selbstschließende Spannmittel (31) an den beiden Seiten der Vorderwandbaugruppe (3) ausgebildet sind, wobei die Seitenwandbaugruppen (4) mit der Vorderwandbaugruppe (3) durch Wickeln der vorderen Enden der Seitenwandbaugruppen (4) um die Spannrollen der selbstschließenden Spannmittel (31) verbunden sind.

11. Sattelanhänger gemäß einem der Ansprüche 1 bis 4,
**dadurch gekennzeichnet,**
**dass** die Seitenwandbaugruppen (4) eine Hartkörperstruktur aufweisen.

12. Sattelanhänger gemäß Anspruch 11,
**dadurch gekennzeichnet,**
**dass** die Seitenwandbaugruppen (4) mit der Fahrgestellbaugruppe (1), dem hinteren Rahmen, der Vorderwand und der Dachbaugruppe (2, 3, 5) mittels Schraubenverbindungen verbunden sind.

13. Sattelanhänger gemäß Anspruch 11 oder 12,
**dadurch gekennzeichnet,**
**dass** auf den beiden Seiten der Fahrgestellbaugruppe (1) nach vorne ragende Seitenbalken ausgebildet sind, wobei
ein Bodenbalken (45) jeweils auf der Unterseite der Seitenwandbaugruppen (4) ausgebildet ist, und der Bodenbalken (45) eine nach unten gerichtete Öffnung aufweist, die im Schnitt einen U-förmigen Innenraum bildet, welcher mit den Seitenbodenbalken (13) in den Abmessungen übereinstimmt, wobei die zwei Teile miteinander verbunden sind und eine konkav-konvexe Kupplung ausbilden, um die Verbindung der Seitenwandbaugruppen (4) mit der Fahrgestellbaugruppe (1) zu realisieren.

14. Sattelanhänger gemäß Anspruch 13,
**dadurch gekennzeichnet,**
**dass** eine zusätzliche Verbindung an einem konvexen Wulst der konkav-konvexen Kupplung mittels Schraubenverbindung (14) realisiert ist.

15. Sattelanhänger gemäß einem der Ansprüche 11 bis 14,
**dadurch gekennzeichnet,**
**dass** die Dachbaugruppe (5) mit den Seitenwandbaugruppen (4) mittels der konkav-konvexen Kupplung verbunden ist.

16. Sattelanhänger gemäß einem der Ansprüche 11 bis 15,
**dadurch gekennzeichnet,**
**dass** ein Eckpfosten (9) jeweils an beiden Seiten der Vorderwandbaugruppe (3) und der hinteren Rahmenbaugruppe (2) ausgebildet ist, um die hintere Rahmen- und die Vorderwandbaugruppe (2, 3) mit den Seitenwandbaugruppen (4) zu verbinden.

17. Sattelanhänger gemäß Anspruch 16,
**dadurch gekennzeichnet,**
**dass** wasserdichte Gummiabstandshalter (6) und Plattenabstandshalter (7) am Verbindungspunkt der Seitenwandbaugruppen (4) mit der hinteren Rahmen- und der Vorderwandbaugruppe (2, 3) ausgebildet sind, wobei die wasserdichten Gummiabstandshalter (6), die Plattenabstandshalter (7) und die Seitenwandbaugruppen (4) dicht auf die Eckpfosten (9) auf beiden Seiten der hinteren Rahmen und vorderen Wandbaugruppe (2, 3) mittels Schraubenverbindungen gedrückt werden, um eine Verbindung der Seitenwandbaugruppen (4) mit der hinteren Rahmen und der vorderen Wandbaugruppe (2, 3) zu realisieren.

18. Sattelanhänger gemäß einem der Ansprüche 2 bis 17,
**dadurch gekennzeichnet,**
**dass** die Schraubenverbindungen bzw. die Verbindungsmittel Gewindebolzen, Stäbe oder Nägel sind.

## Revendications

1. Semi-remorque, comprenant un ensemble formant châssis de semi-remorque (1), un ensemble formant cadre arrière (2), un ensemble formant paroi frontale (3) des ensembles formant parois latérales (4) et un ensemble formant toiture (5), dans lequel ledit ensemble formant châssis de semi-remorque (1) peut être joint de façon combinée et amovible à l'ensemble formant paroi arrière, à l'ensemble formant paroi frontale et aux ensembles formant parois latérales (2, 3, 4),
ledit ensemble formant toiture (5) peut être joint de façon combinée et amovible audit ensemble formant paroi arrière, audit ensemble formant paroi frontale, et auxdits ensembles formant parois latérales (2, 3, 4),
lesdits ensembles formant parois latérales (4) peuvent être joints de façon combinée et amovible à l'ensemble formant cadre arrière (2) et à l'ensemble formant paroi frontale (3),
**caractérisé en ce que**
un seuil (22) est installé sur le côté au sol dudit ensemble formant cadre arrière (2),
une poutre de sol frontale (32) est installée sur le côté au sol dudit ensemble formant paroi frontale (3),
un moyen de fixation (12) est installé respectivement sur l'extrémité frontale et sur l'extrémité arrière de l'ensemble formant châssis (1), ledit moyen de fixation (12) ayant un espace intérieur à section en U formant une gorge en forme de U,
ledit seuil (22) et ladite poutre de sol frontale (32) sont accordés avec l'espace intérieur de la gorge en forme de U dudit moyen de fixation (12) quant à leurs dimensions, de sorte que ledit espace intérieur du moyen de fixation (12) retient ledit seuil (22) et ladite poutre de sol frontale (32) pour rendre fixe l'ensemble formant paroi arrière et l'ensemble formant paroi frontale (2, 3) de manière à réaliser la connexion de l'ensemble formant châssis (1) avec l'ensemble formant paroi arrière et l'ensemble formant paroi frontale (2, 3).

2. Semi-remorque selon la revendication 1, **caractérisé en ce que**,
ledit ensemble formant châssis de semi-remorque (1) est connecté à l'ensemble formant cadre arrière (2) et à l'ensemble formant paroi frontale (3) par des connecteurs à vis ; et
ledit ensemble formant toiture (5) est connecté à l'ensemble formant cadre arrière (2) et à l'ensemble formant paroi frontale (3) par des connecteurs à vis.

3. Semi-remorque selon la revendication 1 ou 2, **caractérisé en ce que** ledit moyen de fixation (12) est en outre connecté audit seuil (22) et à ladite poutre de sol frontale (32) par des connecteurs à vis.

4. Semi-remorque selon l'une quelconque des revendications 1 à 3, **caractérisé en ce qu'**une plaque de fixation (24, 34) est installée respectivement sur les poutres supérieures (23, 33) dudit ensemble formant cadre arrière et dudit ensemble formant paroi frontale (2, 3), les deux extrémités dudit ensemble formant toiture (5) sont placées directement sur lesdites plaques de fixation (24, 34), et dans lequel l'ensemble formant toiture (5) est connecté audit ensemble formant cadre arrière et audit ensemble formant paroi frontale (2, 3) avec des connecteurs.

5. Semi-remorque selon la revendication 4, **caractérisé en ce que** lesdits connecteurs qui connectent ledit ensemble formant toiture (5) avec ledit ensemble formant cadre arrière et ledit ensemble formant paroi frontale (2, 3) incluent
des éléments d'écartement en caoutchouc étanche à l'eau (25, 35), qui sont installés respectivement entre ledit ensemble formant toiture (5) et les plaques de fixation (24, 34) dudit ensemble formant paroi frontale et dudit ensemble formant cadre arrière (3, 2) ;
des connecteurs à vis (27, 37) ; et
des écarteurs en plaques (26, 36) qui sont placés entre lesdits connecteurs à vis (27, 37) et lesdits écarteurs en caoutchouc étanche à l'eau (25, 35) ;
la connexion intime dudit ensemble formant toiture (5) avec l'ensemble formant paroi frontale et l'ensemble formant cadre arrière (3, 2) est réalisée au moyen de la coordination desdits éléments d'écartement en caoutchouc étanche à l'eau (25, 35), des écarteurs en plaques (26, 36) et des connecteurs à vis (27, 37).

6. Semi-remorque selon l'une quelconque des revendications 1 à 5, **caractérisé en ce que** lesdits ensembles formant parois latérales (4) sont des structures corporelles souples.

7. Semi-remorque selon la revendication 6, **caractérisé en ce que** des poulies (41) sont installées au sommet desdits ensembles formant parois latérales (4), et **en ce que** sur deux côtés dudit ensemble formant toiture (5) sont installées des voies (51) accordées auxdites poulies (41), et, par coordination des poulies (41) et des voies (51), lesdits ensembles formant parois latérales (4) sont connectés en coulissement avec ledit ensemble formant toiture (5).

8. Semi-remorque selon la revendication 6 ou 7, **caractérisé en ce que** :
des rails à câbles (11) sont installés sur la partie basse des deux côtés dudit ensemble formant châssis (1), dans lequel plusieurs sangles (43) qui peuvent être tendus sont installés sur le côté inférieur desdits ensembles formant parois latérales (4), et sur les extrémités inférieures desdites sangles (43) sont installés des crochets à sangle (44) qui correspondent auxdits rails à câbles (11) qui, en fonctionnement, sont utilisés pour tendre rapidement lesdits ensembles formant parois latérales (4) ; et
la connexion desdits ensembles formant parois latérales (4) avec l'ensemble formant châssis (1) est réalisée au moyen de la coordination desdits rails à câble (11) et desdites sangles (43).

9. Semi-remorque selon l'une quelconque des revendications 6 à 8, **caractérisé en ce que** des crochets (42) sont installés respectivement sur les extrémités arrière desdits ensembles formant parois latérales (4), sur deux côtés dudit ensemble formant cadre arrière (2) sont installées des plaques de suspension flexibles (21) accordées avec lesdits crochets (42), et lesdits ensembles formant parois latérales (4) sont connectés à l'ensemble formant cadre arrière (2) par suspension desdits crochets (42) sur lesdites plaques de suspension (21).

10. Semi-remorque selon l'une quelconque des revendications 6 à 9, **caractérisé en ce que** des éléments de tensionnement à autoblocage (31) sont installés sur les deux côtés dudit ensemble formant paroi frontale (3) lesdits ensembles formant parois latérales (4) sont connectés avec ledit ensemble formant paroi frontale (3) en enroulant les extrémités frontales des ensembles formant parois latérales (4) autour de rouleaux de tension des éléments de tensionnement à autoblocage (31).

11. Semi-remorque selon l'une quelconque des revendications 1 à 4, **caractérisé en ce que** lesdits ensembles formant parois latérales (4) ont une structure corporelle dure.

12. Semi-remorque selon la revendication 11, **caractérisé en ce que** lesdits ensembles formant parois latérales (4) sont connectés audit ensemble formant châssis (1), audit ensemble formant cadre arrière, audit ensemble formant paroi frontale et audit ensemble formant toiture (2, 3, 5) par des connecteurs à vis.

13. Semi-remorque selon la revendication 11 ou 12, **caractérisé en ce que** :
sur les deux côtés dudit ensemble formant châssis (1) sont installées des poutres latérales inférieures (13) qui se projettent vers l'avant ;
une poutre inférieure (45) est installée respectivement sur les côtés inférieurs desdits ensembles formant parois latérales (4), ladite poutre inférieure (45) présente une ouverture vers le bas en formant un espace intérieur à section en forme de U, qui s'accorde avec ladite poutre latérale inférieure (13) quant à la dimension, et ces deux pièces sont couplées l'une à l'autre en formant un accouplement concave/convexe, de manière à réaliser la connexion des ensembles formant parois latérales (4) avec l'ensemble formant châssis (1).

14. Semi-remorque selon la revendication 13, **caractérisé en ce qu'**une connexion supplémentaire est réalisée par gonflement convexe de l'accouplement concave/convexe au moyen des connecteurs à vis (14).

15. Semi-remorque selon l'une quelconque des revendications 11 à 14, **caractérisé en ce que** ledit ensemble formant toiture (5) est connecté aux ensembles formant parois latérales (4) avec des accouplements concave/convexe.

16. Semi-remorque selon l'une quelconque des revendications 11 à 15, **caractérisé en ce qu'**un poteau de coin (9) est installé respectivement sur les deux côtés dudit ensemble formant paroi frontale (3) et dudit ensemble formant cadre arrière (2), destiné à être utilisé pour connecter l'ensemble formant cadre arrière et l'ensemble formant paroi frontale (2, 3) avec les ensembles formant parois latérales (4).

17. Semi-remorque selon la revendication 16, **caractérisé en ce que** des éléments d'écartement en caoutchouc étanche à l'eau (6) et des éléments d'écartement en plaques (7) sont en outre installés sur le point de connexion desdits ensembles formant parois latérales (4) avec l'ensemble formant cadre arrière et l'ensemble formant paroi frontale (2, 3), lesdits éléments d'écartement en caoutchouc étanche à l'eau (6), lesdits éléments d'écartement en plaques (7) et lesdits ensembles formant parois latérales (4) sont pressés intimement contre les poteaux de coin (9) sur les deux côtés de l'ensemble formant cadre arrière et de l'ensemble formant paroi frontale (2, 3) avec des connecteurs à vis de manière à réaliser la connexion des ensembles formant parois latérales (4) avec l'ensemble formant cadre arrière et l'ensemble formant paroi frontale (2, 3).

18. Semi-remorque selon l'une quelconque des revendications 2 à 17, **caractérisé en ce que** lesdits connecteurs à vis sont des goujons, des barres ou des clous filetés.
